# FASCICULE DE BREVET EUROPEEN

(11) **EP 2 879 129 B1**
(45) Date de publication et mention de la délivrance du brevet: **03.07.2019**
(21) Numéro de dépôt: 14003466.1
(22) Date de dépôt: 09.10.2014
(51) Int. Cl.: E04B 1/84, G10K 11/172, B64C 1/40

(54) **REVÊTEMENT ISOLANT ACOUSTIQUEMENT MUNI DE RÉSONATEURS, UN PANNEAU MUNI DE CE REVÊTEMENT, ET UN AÉRONEF**
SCHALLDÄMMVERKLEIDUNG, DIE MIT RESONATOREN AUSGESTATTET IST, MIT EINER SOLCHEN VERKLEIDUNG AUSGESTATTETES PANEEL, UND LUFTFAHRZEUG
ACOUSTICALLY INSULATING COATING PROVIDED WITH RESONATORS, PANEL PROVIDED WITH SAID COATING, AND AIRCRAFT

(30) Priorité: 31.10.2013 FR 1302538
(43) Date de publication de la demande: 03.06.2015
(73) Titulaire: Airbus Helicopters, 13725 Marignane Cedex (FR)
(72) Inventeur: Caillet, Julien, F-13170 Les Pennes Mirabeau (FR); Manfredotti, Thomas, F-06480 La Colle Sur Loup (FR)
(74) Mandataire: GPI & Associés

(56) Documents cités:
- WO-A2-2012/131011
- US-A1- 2009 078 519
- US-A1- 2011 005 165
- US-A1- 2011 020 592
- US-A1- 2011 189 440

## Description

La présente invention concerne un revêtement isolant acoustiquement muni de résonateurs, un panneau comprenant ce revêtement, et un aéronef.

L'invention se situe donc dans le domaine du traitement des nuisances acoustiques à bord d'un aéronef.

La présente invention est plus particulièrement relative aux systèmes de traitement d'un bruit. En effet, la réduction sonore du bruit est un problème croissant du fait des impacts du bruit sur le confort et la santé des personnes. Ce problème est en particulier mais non exclusivement rencontré dans le domaine technique des aéronefs, et notamment des aéronefs à voilure tournante.

En effet, un aéronef à voilure tournante comprend au moins un rotor de sustentation mis en rotation par une chaîne cinématique, voire un rotor arrière pour la commande en lacet de l'aéronef. Cette chaîne cinématique peut inclure au moins un moteur et au moins une boîte de transmission de puissance interposée entre le moteur et le rotor de sustentation.

De plus, un aéronef peut comprendre des organes mécaniques mobiles pour refroidir des équipements de l'aéronef, et notamment pour refroidir une boîte de transmission de puissance et des équipements électroniques. Des organes mécaniques mobiles peuvent aussi être utilisés pour distribuer de l'air dans une cabine. Classiquement, un ventilateur est utilisé pour refroidir un équipement et/ou pour déplacer une masse d'air.

Ainsi, un tel aéronef comprend généralement de multiples sources de bruit, incluant par exemple une boîte de transmission de puissance, et des pales de turbomoteurs ou encore de ventilateurs.

Dès lors, ces sources de bruit peuvent couvrir sur un giravion l'ensemble du spectre de fréquences audibles par un homme, ce spectre de fréquences s'étendant d'un bruit audible ayant une composante fréquentielle de l'ordre de 20 hertz jusqu'à un bruit audible ayant une composante fréquentielle de l'ordre de 20000 hertz.

Un panneau structurel ou d'habillage d'un aéronef comprend généralement au moins une paroi en matériaux métalliques, composites et/ou thermoplastiques.

Plusieurs solutions ont déjà été proposées pour atténuer le bruit transmis au travers de ces panneaux.

Pour améliorer l'isolation acoustique des panneaux pour des bruits émis à des moyennes fréquences classiquement comprises entre 300 hertz et 1000 hertz, une première solution généralement utilisée repose sur l'ajout d'une couche en matériaux élastomères sur une surface externe du panneau.

Cet ajout présente comme caractéristique d'augmenter la masse surfacique du panneau. Or, la capacité d'isolation acoustique d'un panneau suit principalement une loi dite « loi de masse » selon laquelle la capacité d'isolation d'un panneau mesurée en décibels varie proportionnellement au logarithme de la masse surfacique de ce panneau. L'augmentation de la masse surfacique du panneau tend alors à optimiser les performances acoustiques de ce panneau, mais au détriment du bilan global de masse de l'aéronef.

De plus, la couche d'élastomère augmente l'amortissement du panneau permettant de réduire l'effet négatif d'éventuelles résonances vibratoires avec des éléments annexes.

Par contre, cette première solution présente de fait l'inconvénient d'augmenter la masse du panneau.

Le document FR 2.815.603 suggère d'intégrer dans des panneaux composites à structure sandwich un corps solide dans un espace interne fermé de cette structure sandwich.

Cette deuxième solution est remarquable en permettant d'apporter de l'amortissement à la structure sandwich avec une faible masse ajoutée.

Son efficacité est notable pour des bruits émis dans le domaine des hautes fréquences, mais toutefois moindre pour des bruis émis à des moyennes fréquences.

Le document US2011/0020592 propose l'intégration d'éléments dissipatifs à géométrie notamment elliptique pour améliorer l'amortissement de panneaux structurels ou d'habillages à moindre masse ajoutée. Chaque élément dissipatif peut amplifier le déplacement de masses dans un plan sensiblement parallèle au panneau à traiter.

Dès lors, la masse surfacique d'un panneau peut être augmentée à moindre « coût massique ».

Le document FR 2.939.406 suggère d'interposer une mousse entre deux parois. Suite à l'excitation d'une première paroi par un bruit, la deuxième paroi apporte une réponse vibratoire visant à neutraliser l'excitation d'origine, à l'instar d'un résonateur.

La mousse inclut éventuellement des inserts pour ne pas s'affaisser.

L'effet de ses solutions est particulièrement efficace pour traiter des bruis émis à hautes fréquences. Le traitement de bruis émis à moyennes fréquences s'avèrent toutefois délicat, et peut induire la mise en oeuvre d'un dispositif ayant une masse élevée.

Des techniques actives à base d'actionneurs piézo-électriques par exemple ont également été proposées, mais peuvent présenter plusieurs inconvénients tels que leur complexité, leur coût, ou encore l'intégration d'un équipement électronique de puissance.

D'autres concepts sont utilisés pour améliorer l'absorption de bruits de panneaux, basés par exemple sur l'ajout de micro-perforations dans une paroi.

On connait en outre les documents US 2011/189440, US 2011/005165, WO 2012/131011 et US 2009/078519.

La présente invention a alors pour objet de proposer un revêtement pouvant être appliqué sur un panneau structurel ou d'habillage. Ce revêtement vise à réduire la transmission du bruit par le panneau à moindre masse ajoutée, en ciblant la réduction de bruit par exemple sur une bande de moyennes fréquences pour lesquelles les moyens actuels sont parfois peu efficaces à moindre coût en termes de masse. Le revêtement proposé pourra être utilisé comme complément à l'ensemble des concepts présentés ci-dessus, par exemple.

Selon l'invention, un revêtement isolant acoustiquement est muni de résonateurs.

Ce revêtement comporte un treillis muni d'au moins deux résonateurs et d'au moins un plot pour fixer au moins deux résonateurs sur un panneau à traiter, chaque résonateur incluant une lame s'étendant longitudinalement dans un plan d'une extrémité du résonateur fixée à un plot vers une autre extrémité du résonateur, ladite lame ayant au moins une excroissance transversale pour battre selon une direction en élévation perpendiculaire audit plan, chaque plot s'étendant en élévation d'une face à solidariser au panneau à traiter vers chaque résonateur fixé à ce plot, au moins un plot ayant un moyen d'amortissement interposé entre ladite face et chaque résonateur fixé à ce plot.

Dès lors, le revêtement met en oeuvre un treillis de résonateurs. Par exemple, le treillis est usiné à partir d'un bloc de matière métallique par des techniques usuelles peu onéreuses. Une plaque usinée peut être obtenue notamment par une découpe à l'aide d'un jet d'eau ou d'un laser, ou encore par un usinage chimique.

Le treillis peut aussi être fabriqué à l'aide de matériaux composites.

Chaque résonateur a pour fonction de filtrer les vibrations d'un panneau aux fréquences les plus gênantes d'un point de vue confort des passagers, et notamment aux moyennes fréquences.

Les résonateurs ont pour effet d'étouffer les vibrations en créant une antirésonance centrée sur une fréquence donnée de réglage dénommée « fréquence d'antirésonance ». La largeur de la bande de fréquences traitées est maximisée par le moyen d'amortissement.

Dès lors, le treillis comporte au moins deux résonateurs pouvant être qualifiés de résonateurs amortis du fait de la présence du moyen d'amortissement.

Lorsque le panneau équipé du revêtement vibre sous l'effet d'ondes sonores par exemple, les résonateurs se déforment selon une direction en élévation sensiblement perpendiculaire au panneau, contrairement à des dispositifs du type décrit dans le document US2011/0020592.

Cette déformation est amortie par le moyen d'amortissement. La déformation amortie d'un résonateur permet alors de traiter la vibration du panneau sur une large bande de fréquences centrée sur la fréquence d'antirésonance de réglage de ce résonateur.

Notamment, le treillis permet de traiter des bruits émis dans la gamme des fréquences dites moyennes fréquences s'étendant typiquement entre 300 hertz et 1000 hertz sur un aéronef, pour laquelle les moyens de réduction conventionnels peuvent présenter un rapport efficacité d'isolation/masse ajoutée limité ou des contraintes d'intégration non compatibles avec les applications visées.

En effet, la bande de fréquences traitée par le revêtement est directement pilotée par la géométrie des résonateurs du treillis et par le choix de l'amortissement apporté par le moyen d'amortissement au niveau des plots. Le revêtement est donc adaptable à la bande de fréquences visée et à la composition de base du panneau à traiter.

En effet, la fréquence d'antirésonance d'un résonateur est proportionnelle à la racine carrée du quotient de la raideur du résonateur divisée par la masse du résonateur. Un opérateur peut alors adapter la géométrie des excroissances des lames de résonateurs pour obtenir une masse conduisant à la fréquence d'antirésonance souhaitée.

De plus, chaque résonateur présente une excroissance suffisante pour générer le battement de la lame du résonateur lorsqu'un panneau vibre.

Dès lors, le treillis peut posséder une faible épaisseur. La masse du revêtement peut alors être relativement faible ce qui confère au revêtement un rapport efficacité d'isolation/masse ajoutée optimisée.

En outre, le treillis est alors suffisamment souple pour pouvoir être agencé sur des panneaux courbés par exemple.

Ainsi, le revêtement tend à diminuer la transmission de bruits émis à moyennes fréquences par des panneaux structurels ou d'habillages d'aéronefs, en tendant à générer une augmentation massique du panneau réduite et en présentant un encombrement réduit.

De plus, la réalisation du revêtement est relativement simple et peu onéreuse.

En outre, au moins un plot comporte une embase munie d'une face à solidariser à un panneau à traiter et une tige traversant une extrémité d'au moins un résonateur, un jeu radial séparant chaque tige du résonateur, ce plot comportant un moyen d'agrafage serrant une extrémité d'au moins un résonateur contre l'embase.

On entend par « jeu radial » un espace supérieur à un simple jeu de fabrication permettant l'emmanchement d'un objet sur une tige d'un autre objet.

Par conséquent, le treillis est agrafé au plot par des moyens d'agrafage tels que des griffes ou des boulons.

En outre, chaque plot peut être fixé dans un panneau par des moyens usuels, tels que par collage ou vissage par exemple.

Au niveau de chaque plot, un jeu radial est aménagé entre le treillis et la tige du plot afin de compenser une éventuelle différence de dilatation entre le matériau constituant le panneau à traiter et le matériau utilisé pour la constitution du treillis, par exemple de l'acier. Ainsi, chaque extrémité d'un résonateur traversée par un plot peut comprendre un orifice d'un diamètre supérieur au diamètre de la tige d'un plot.

De plus, le jeu radial confère une liberté de mouvement en élévation au résonateur associé. Dès lors, le jeu radial peut être compris entre un millimètre et deux millimètres par exemple.

Ce jeu radial permet en outre d'agencer le treillis sur une multitude de plots sans introduite de contraintes initiales sur les résonateurs.

Par contre, l'embase peut posséder un diamètre supérieur au diamètre d'un tel orifice.

Ce revêtement peut comporter une ou plusieurs des caractéristiques additionnelles qui suivent.

Ainsi, un résonateur peut comporter une première largeur selon une direction transversale qui est constante entre ses extrémités, à l'exception d'au moins une zone de la lame comprenant une excroissance pour présenter une deuxième largeur transversale supérieure à la première largeur.

La deuxième largeur est éventuellement évolutive longitudinalement ou constante selon la géométrie de l'excroissance. Un tel résonateur présente l'avantage de pouvoir être manufacturé à moindre coût.

Par ailleurs, au moins deux résonateurs présentent éventuellement des excroissances ayant des géométries distinctes.

Notamment, deux résonateurs peuvent présenter des lames identiques à l'exception de leurs excroissances qui présentent des géométries distinctes.

On entend par « géométrie » la forme et/ou les dimensions des excroissances. Par exemple deux excroissances de deux résonateurs peuvent avoir la forme de pavés ayant des longueurs différentes. Selon un autre exemple, des excroissances ont une forme de pavé, et d'autre excroissance ont une forme de cylindre.

Par suite, un tel revêtement permet de traiter de multiples bandes de fréquences simultanément en utilisant des résonateurs différents.

Il parait par exemple possible de traiter la gamme des moyennes fréquences en utilisant trois types de résonateurs différents.

Au moins une excroissance d'au moins un résonateur peut en outre être décomposée en deux extensions transversales disposées transversalement de part et d'autre d'une lame, un axe longitudinal de symétrie de la lame représentant aussi un axe de symétrie des extensions transversales. Cette disposition symétrique tend à favoriser le mouvement de battement du résonateur selon une direction sensiblement orthogonale au panneau à traiter.

Par ailleurs, au moins deux résonateurs reliés à un même plot présentent éventuellement une extrémité commune.

Ainsi, au moins deux résonateurs sont solidaires l'un de l'autre par le bais d'une extrémité commune. Les résonateurs peuvent être obtenus en usinant une plaque de matière à cet effet.

En outre, au moins un résonateur peut être relié à un premier plot par une extrémité et à un deuxième plot par une autre extrémité. Les extrémités d'un résonateur peuvent être communes à d'autres résonateurs.

Un résonateur peut ainsi être relié à un panneau à traiter par ses deux extrémités.

Le treillis peut donc être une plaque usinée, chaque résonateur ayant au moins une extrémité commune avec un autre résonateur.

La fabrication du treillis est éventuellement réalisée en découpant une plaque par des techniques connues telles qu'une technique de découpe par jet d'eau, par laser ou par poinçonnage. Cet usinage permet la réalisation de toutes formes de treillis, notamment en termes de géométrie des excroissances.

Le treillis peut en outre être adapté à diverses formes de panneau, sans nécessiter un outillage complexe. Ainsi, un panneau d'habillage ou structurel est d'abord fabriqué pour obtenir sa forme définitive, éventuellement courbe, puis le revêtement est apposé directement sur ce panneau.

Au final, cette fabrication est donc simple et peu coûteuse.

Par ailleurs, au moins une lame peut avoir une épaisseur selon ladite direction en élévation inférieure à un millimètre.

Un treillis en forme de plaque peut donc avoir une faible épaisseur. Cette faible épaisseur facilite sa mise en place sur un panneau courbe. De plus, cette épaisseur permet de manière surprenante d'éviter le flambage du treillis lors du montage sur un panneau.

En outre, au moins une lame présente éventuellement une excroissance à équidistance de la première extrémité et de la deuxième extrémité de cette lame.

Par ailleurs, ce revêtement peut comporter un couvercle pour protéger le treillis contre des chocs.

Par ailleurs, le moyen d'amortissement peut comporter une rondelle amortissante entourant chaque plot.

L'amortissement est créé par des rondelles ajoutées au niveau des plots. Ces rondelles sont par exemple en mousses (EPDM, silicone ou autre) et/ou en élastomères. Dès lors, chaque rondelle est insérée autour d'un plot en étant disposée entre le treillis et le panneau à traiter.

Chaque lame d'un résonateur est alors plaquée contre une rondelle amortissante. Chaque rondelle peut d'ailleurs comporter une épaisseur légèrement supérieure à l'épaisseur de l'embase des plots pour garantir sa compression par une lame.

Le diamètre de ces rondelles permet de régler l'amortissement apporté, et par suite, la largeur de la plage d'efficacité du revêtement.

De plus, les rondelles sont également utilisées pour éviter tout problème de corrosion galvanique du treillis le cas échéant.

Pour agencer un revêtement, les plots sont alors fixés au panneau à traiter. Par suite, le treillis est emmanché sur les tiges des plots, puis le treillis est solidarisé à ces plots par les moyens d'agrafage.

Par ailleurs, le revêtement peut comporter au moins un organe pesant reliant au moins deux lames de deux résonateurs.

Cet organe pesant vise à optimiser la masse du revêtement.

Par exemple, un organe pesant relie au moins deux excroissances d'au moins deux lames de deux résonateurs.

Selon une réalisation, le treillis comporte une plaque usinée présentant une pluralité de résonateurs, chaque résonateur s'étendant longitudinalement entre deux extrémités perforées, chaque extrémité étant commune à plusieurs résonateurs, chaque extrémité étant emmanchée sur une tige d'un plot, chaque plot étant partiellement entouré d'une rondelle amortissante.

Outre un revêtement, l'invention vise un panneau muni d'un panneau comportant au moins une paroi.

Ce panneau comporte alors au moins un revêtement du type précédemment décrit, chaque treillis d'un revêtement étant fixé à une paroi du panneau par les plots de ce treillis uniquement.

L'invention proposée peut être appliquée à tout type de panneau tel qu'un panneau comprenant une âme interposée entre deux parois, un panneau comprenant au moins une paroi monolithique, voire , un panneau incluant un système d'insonorisation.

De plus, le panneau peut être recouvert partiellement par chaque revêtement.

Par ailleurs, l'invention vise un aéronef comportant un tel panneau.

L'invention et ses avantages apparaîtront avec plus de détails dans le cadre de la description qui suit avec des exemples donnés à titre illustratif en référence aux figures annexées qui représentent :
- la figure 1, un aéronef muni d'un revêtement selon l'invention vu de dessus,
- la figure 2, un résonateur selon l'invention,
- la figure 3, un treillis muni de résonateurs identiques,
- la figure 4, un plot coopérant avec une griffe pour enserrer un treillis de résonateurs,
- la figure 5, un plot coopérant avec un boulon pour enserrer un treillis de résonateurs,
- la figure 6, une coupe en élévation d'un panneau selon la figure 1,
- les figures 7 et 8, des diagrammes illustrant les résultats obtenus suite à l'agencement d'un revêtement selon l'invention sur un panneau,
- les figures 9 à 11, des schémas illustrant des variantes munies d'organes pesants agencés entre au moins deux résonateurs.

Les éléments présents dans plusieurs figures distinctes sont affectés d'une seule et même référence.

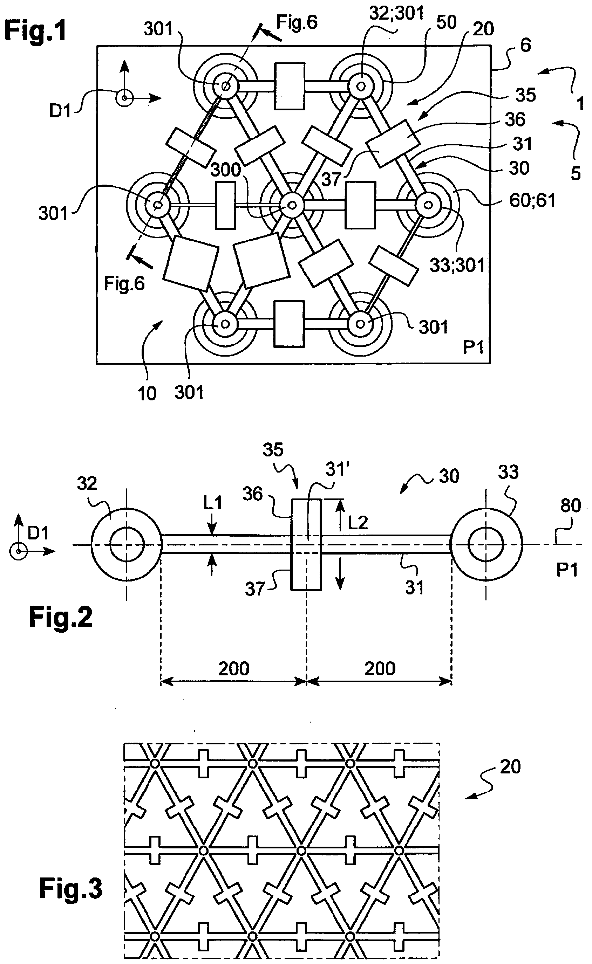

La figure 1 présente un aéronef 1 muni d'un panneau 5 vu de dessus. Les autres organes de l'aéronef ne sont pas représentés pour ne pas alourdir inutilement la figure.

Ce panneau 5 comprend au moins une paroi 6. Tout type de panneau peut être utilisé. Par exemple, le panneau peut comporter au moins deux parois enserrant une âme de manière à former un sandwich structurel, ou peut être dépourvu d'une telle âme. Au moins une paroi d'un panneau peut être fabriquée à l'aide de matériaux composites ou encore être usinée à partir d'un bloc de matière.

De plus, le panneau 5 est pourvu d'au moins un revêtement 10 selon l'invention. La figure 1 présente un panneau équipé d'un unique revêtement, mais ce panneau pourrait être équipé d'une pluralité de revêtements suivant le besoin.

Un tel revêtement est muni d'un treillis 20 comprenant des résonateurs 30 et des plots 50 pour fixer les résonateurs au panneau.

Le treillis 20 comporte au moins deux résonateurs 30.

En référence à la figure 2, chaque résonateur est muni d'une lame 31 s'étendant longitudinalement le long d'un axe longitudinal 80. Plus précisément, la lame 31 s'étend entre une extrémité 32 du résonateur dite « première extrémité » et une autre extrémité 33 dite « deuxième extrémité ». Au moins une extrémité est alors reliée à un plot. Le terme « extrémité » se réfère à l'une quelconque des première et deuxième extrémités d'un résonateur.

L'épaisseur de la lame selon une direction en élévation D1 est contenue dans un plan P1 sensiblement parallèle au panneau 5 équipé du revêtement. Cette épaisseur est favorablement inférieure à un millimètre, et peut par exemple être comprise entre 0.3 millimètre et 0.8 millimètre.

Par ailleurs, un résonateur a une première largeur L1 sensiblement constante entre sa première extrémité 32 et sa deuxième extrémité 33 à l'exception d'au moins une zone 31' de la lame 31 comprenant une excroissance 35 transversale. Par suite, la lame 31 d'un résonateur présente la première largeur L1 en dehors des zones présentant une excroissance 35.

Chaque excroissance 35 s'étend transversalement à partir d'une lame 31, de manière à conférer à ladite zone 31' une deuxième largeur L2 évolutive ou continue supérieure à la première largeur L1.

On entend par « excroissance » 35 une saillie qui s'étend transversalement à partir d'une zone 31' de la lame 31. Ainsi, une excroissance 35 comprend au moins une extension 36, 37 saillant transversalement de la lame 31.

Par exemple, une excroissance 35 comprend deux extensions 36, 37 s'étendant transversalement et éventuellement symétriquement de part et d'autre d'une zone 31' de la lame 31.

De plus, un résonateur peut posséder une excroissance disposée symétriquement entre sa première extrémité 32 et sa deuxième extrémité 33. Une excroissance 35 se trouve donc à une équidistance 200 de ces extrémités 32, 33.

En référence à la figure 1, le treillis peut comprendre des résonateurs munis d'excroissances différentes pour traiter des bruits émis à diverses fréquences. Deux excroissances de deux résonateurs distincts peuvent ainsi avoir des formes et / ou des dimensions différentes.

Deux résonateurs peuvent alors par exemple présenter des lames identiques et/ou des excroissances géométriquement différentes.

Au contraire, la figure 3 présente une variante d'un treillis comprenant des résonateurs identiques.

En référence à la figure 1, au moins deux résonateurs 30 peuvent posséder une extrémité 32, 33 commune pour être reliés à un même plot 50.

Selon l'exemple de la figure 1 une extrémité centrale 300 du treillis est commune à six résonateurs s'étendant radialement à partir de cette extrémité. Par contre, les autres extrémités 301 des résonateurs situées à la périphérie du treillis sont communes à trois résonateurs.

Par ailleurs, au moins un résonateur 30 est relié à un premier plot 50 par une extrémité 32 et à un deuxième plot 50 par une autre extrémité 33. Selon l'exemple de la figure 1, chaque résonateur s'étend entre deux extrémités qui sont chacune liées à un plot.

Lorsque les résonateurs sont liés deux à deux par une de leurs extrémités, le treillis 20 peut être obtenu à l'aide d'une plaque usinée. La fabrication de ce treillis est alors aisée. Le treillis représente ainsi un maillage muni de noeuds et d'organes allongés, chaque noeud étant représenté par une extrémité d'au moins un résonateur et chaque organe allongé étant représenté par une lame d'un résonateur.

Indépendamment de la réalisation, le treillis est donc fixé au panneau 5 par des plots 50, chaque plot 50 liant une extrémité d'au moins un résonateur au panneau 5. Au moins un plot peut être collé ou encore vissé au panneau par exemple.

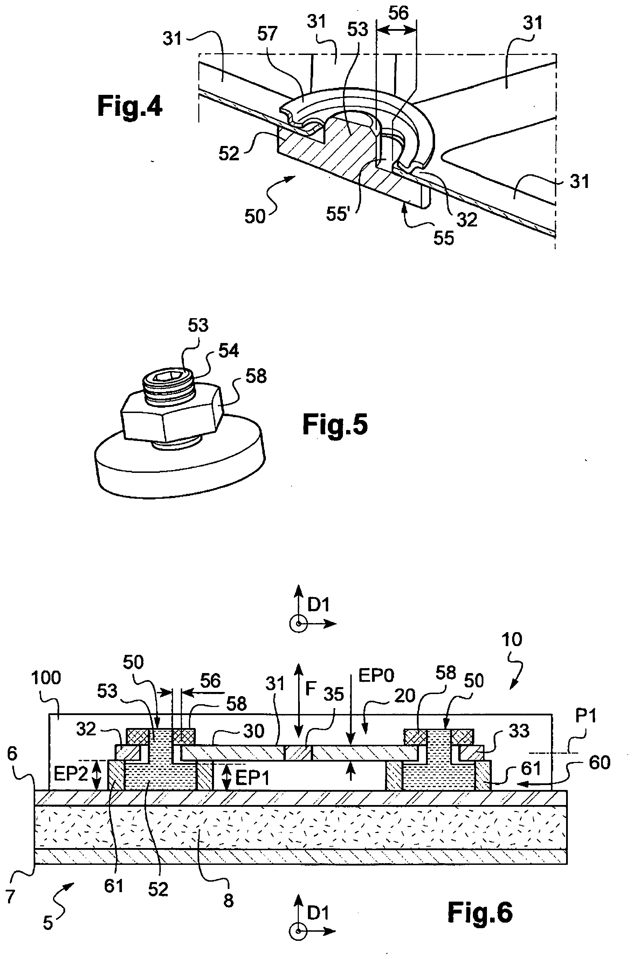

En référence à la figure 4, un plot peut s'étendre en élévation d'une embase 52 fixée à un panneau vers une tige 53 autour de laquelle est emmanchée une extrémité d'au moins un résonateur.

L'embase 52 comporte alors une face 55 à fixer à un panneau, et une surface 55' à partir de laquelle s'étend la tige 53 du plot. L'embase 52 peut alors posséder des dimensions supérieures aux dimensions de la tige 53, par exemple leur diamètre dans le cadre d'une embase et d'une tige cylindrique.

Dans ces conditions, l'embase d'un plot est fixée à un panneau 5 par ladite face 55. Par contre, la tige 53 de ce plot traverse un orifice d'une extrémité d'un résonateur. Un jeu radial 56 est favorablement ménagé entre la tige 53 et l'extrémité correspondante du résonateur

Pour fixer le treillis à un plot, ce plot comprend alors un moyen d'agrafage pour bloquer le treillis contre le plot.

Selon la figure 4, ce moyen d'agrafage est une griffe 57.

Par contre, le moyen d'agrafage est un boulon 58 coopérant avec un filetage 54 de la tige 53 du plot selon la figure 5.

Ces exemples sont donnés à titre illustratif, tout moyen de fixation pouvant être implémenté. Par exemple, au moins un plot peut être solidaire du treillis, en représentant un organe constitutif de ce treillis.

La figure 6 présente une coupe d'un revêtement reposant sur un panneau 5.

Ce panneau 5 peut comprendre une unique paroi, ou encore un sandwich muni d'une âme 8 disposée entre deux parois 6 et 7 par exemple.

Selon une réalisation, le treillis 20 du revêtement comporte une plaque usinée présentant une pluralité de résonateurs 30. Chaque résonateur 30 s'étend longitudinalement entre deux extrémités 32, 33 perforées, chaque extrémité 32, 33 étant commune à plusieurs résonateurs 30 et étant emmanchée sur une tige 53 d'un plot 50.

De plus, au moins un plot 50 comprend un moyen d'amortissement 60 interposé entre la face 55 du plot solidarisée au panneau 5 et chaque résonateur 30 fixé à ce plot. Par exemple chaque plot comporte un tel moyen d'amortissement.

Un moyen d'amortissement peut comporter une rondelle 61 amortissante entourant un plot 50.

Ainsi, la rondelle 61 présente avantageusement une épaisseur amortissante EP2 supérieure à l'épaisseur d'appui EP1 de l'embase d'un plot, pour garantir un contact entre la lame du résonateur et la rondelle. Il est à noter que dans une solution alternative non représentée on pourrait disposer la rondelle 61 entre la surface 55' du plot 50 et le résonateur.

Par ailleurs, le revêtement peut comprendre un couvercle 100 pour protéger un treillis.

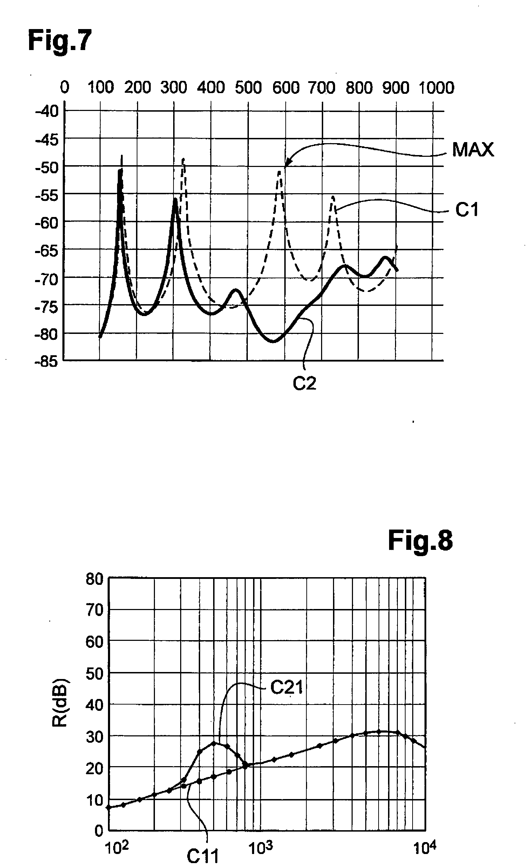

Les figures 7 et 8 illustrent l'efficacité d'un tel revêtement, indépendamment de sa variante.

Lorsqu'un bruit excite un panneau 5 équipé de l'invention, ce panneau se met à vibrer. Selon la fréquence de l'excitation, chaque résonateur peut vibrer en se déformant selon une direction en élévation D1 perpendiculaire au panneau 5 et au plan P1 dans lequel se trouve la lame 31 du résonateur au repos. Chaque résonateur filtre alors la vibration du panneau pour tendre à l'atténuer.

En agençant des résonateurs présentant des excroissances distinctes, il est possible de filtrer une pluralité de bruits distincts.

La figure 7 présente un diagramme comportant en abscisse une fréquence de vibration, et en ordonnée la réponse vibratoire d'un panneau.

La première courbe C1 présente ainsi la réponse vibratoire d'un panneau dépourvu d'un revêtement selon l'invention, alors que la deuxième courbe C2 présente ainsi la réponse vibratoire d'un panneau équipé d'un revêtement selon l'invention.

En l'absence de l'invention, la réponse vibratoire panneau dépourvu d'un revêtement selon l'invention présente un pic MAX à une moyenne fréquence de l'ordre de 580 hertz. A l'inverse, le revêtement selon l'invention permet de supprimer ce pic sur la deuxième courbe.

La figure 8 illustre l'atténuation acoustique pouvant résulter de l'implémentation d'un revêtement selon l'invention.

Cette figure 8 présente alors un diagramme comportant en abscisse une fréquence de vibration, et en ordonnée l'atténuation acoustique apportée par le panneau étudié.

La première courbe C11 présente ainsi l'atténuation acoustique apportée par un panneau dépourvu d'un revêtement selon l'invention, alors que la deuxième courbe C21 présente l'atténuation acoustique apportée par un panneau équipé d'un revêtement selon l'invention.

On constate que le revêtement peut tendre à améliorer l'atténuation acoustique d'un panneau dans la gamme des moyennes fréquences.

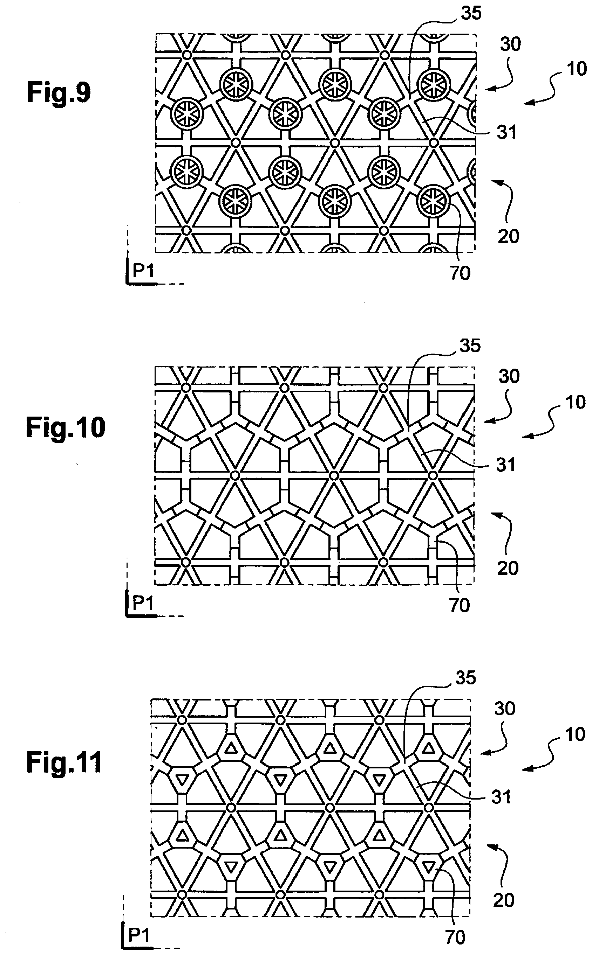

Par ailleurs, les figures 9 à 11 illustrent un revêtement 10 comportant au moins un organe pesant 70 s'étendant entre au moins deux lames 31 de deux résonateurs 30. Par exemple, un organe pesant 70 relie au moins deux excroissances 35 d'au moins deux lames 31 de deux résonateurs 30.

Selon la figure 9, un organe pesant comprend un anneau enserrant une étoile, l'anneau étant relié à trois excroissances respectivement de trois lames.

Selon la figure 10, un organe pesant comprend une étoile à trois branches, chaque branche étant reliée à une excroissance d'une lame.

Selon la figure 11, un organe pesant a une forme triangulaire reliée par ses sommets à trois excroissances respectivement de trois lames.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Revêtement (10) isolant acoustiquement muni de résonateurs (30),
ledit revêtement (10) comportant un treillis (20) muni d'au moins deux résonateurs (30) et d'au moins un plot (50) pour fixer au moins deux résonateurs (30) sur un panneau (5) à traiter, chaque résonateur (30) incluant une lame (31) s'étendant longitudinalement dans un plan (P1) d'une extrémité (32) du résonateur (30) fixée à un plot (50) vers une autre extrémité (33) du résonateur (30), ladite lame (31) ayant au moins une excroissance (35) transversale, chaque plot (50) s'étendant en élévation d'une face (55) à solidariser au panneau (5) à traiter vers chaque résonateur (30) fixé à ce plot (50),
**caractérisé en ce que**:
au moins un plot (50) inclut un moyen d'amortissement (60) interposé entre ladite face (55) et chaque résonateurs (30) fixé à ce plot, au moins un plot (50) comporte une embase (52) munie d'une face (55) à solidariser à un panneau (5) à traiter et une tige (53) traversant une extrémité (32, 33) d'au moins un résonateur (30), un jeu radial (56) séparant chaque tige (53) du résonateur (30), ledit plot (50) comportant un moyen d'agrafage (57, 58) serrant une extrémité (32, 33) d'au moins un résonateur (30) contre l'embase (52);
et ladite excroissance transversale est configurée pour battre selon une direction en élévation (D1) perpendiculaire audit plan (P1).

2. Revêtement selon la revendication 1,
**caractérisé en ce qu'**un résonateur (30) comporte une première largeur (L1) constante ente ses dites extrémités (32) selon une direction transversale à l'exception d'au moins une zone (31') de la lame (31) comprenant une excroissance (35) pour présenter une deuxième largeur (L2) transversale supérieure à la première largeur (L1).

3. Revêtement selon l'une quelconque des revendications 1 à 2,
**caractérisé en ce qu'**au moins deux résonateurs (30) présentent des excroissances (35) ayant des géométries distinctes.

4. Revêtement selon la revendication 3,
**caractérisé en ce que** lesdits deux résonateurs (30) présentent des lames (31) identiques à l'exception de leurs excroissances (35) qui présentent des géométries distinctes.

5. Revêtement selon l'une quelconque des revendications 1 à 4,
**caractérisé en ce qu'**au moins deux résonateurs (30) reliés à un même plot (50) présentent une extrémité (32, 33) commune.

6. Revêtement selon l'une quelconque des revendications 1 à 5,
**caractérisé en ce qu'**au moins un résonateur (30) est relié à un premier plot (50) par une extrémité (32) et à un deuxième plot (50) par une autre extrémité (33).

7. Revêtement selon l'une quelconque des revendications 1 à 6,
**caractérisé en ce que** ledit treillis (20) est une plaque usinée, chaque résonateur (30) ayant au moins une extrémité (32, 33) commune avec un autre résonateur (30).

8. Revêtement selon l'une quelconque des revendications 1 à 7,
**caractérisé en ce qu'**au moins une lame (31) a une épaisseur (EP0) selon ladite direction en élévation (D1) inférieure à un millimètre.

9. Revêtement selon l'une quelconque des revendications 1 à 8,
**caractérisé en ce qu'**au moins une lame (31) présente une excroissance (35) à équidistance de la première extrémité (32) et de la deuxième extrémité (33) de cette lame (31).

10. Revêtement selon l'une quelconque des revendications 1 à 9,
**caractérisé en ce que** ce revêtement (10) comporte un couvercle (100) pour protéger ledit treillis (20).

11. Revêtement selon l'une quelconque des revendications 1 à 10,
**caractérisé en ce que** ledit moyen d'amortissement (60) comporte une rondelle (61) amortissante entourant chaque plot (50).

12. Revêtement selon l'une quelconque des revendications 1 à 11,
**caractérisé en ce que** ledit revêtement (10) comporte au moins un organe pesant (70) reliant au moins deux lames (31) de deux résonateurs (30).

13. Revêtement selon la revendication 12,
**caractérisé en ce que** ledit organe pesant (70) relie au moins deux excroissances (35) d'au moins deux lames (31) de deux résonateurs (30).

14. Revêtement selon l'une quelconque des revendications 1 à 13,
**caractérisé en ce que** ledit treillis (20) comporte une plaque usinée présentant une pluralité de résonateurs (30), chaque résonateur (30) s'étendant longitudinalement entre deux extrémités (32, 33) perforées, chaque extrémité (32, 33) étant commune à plusieurs résonateurs (30), chaque extrémité (32, 33) étant emmanchée sur une tige (53) d'un plot (50), chaque plot (50) étant partiellement entouré d'une rondelle (61) amortissante.

15. Revêtement selon l'une quelconque des revendications 1 à 14,
**caractérisé en ce qu'**au moins une excroissance (35) d'au moins un résonateur (30) est décomposée en deux extensions (36, 37) transversales disposées transversalement de part et d'autre d'une lame (31), un axe longitudinal (80) de symétrie de la lame représentant un axe de symétrie des extensions (36, 37) transversales.

16. Panneau (5) muni d'au moins une paroi,
**caractérisée en ce que** ledit panneau comporte au moins un revêtement (10) selon l'une quelconque des revendications 1 à 15, chaque treillis (20) d'un revêtement (10) étant fixé à une paroi du panneau (5) par les plots (50) de ce treillis (20) uniquement.

17. Aéronef (1),
**caractérisé en ce que** cet aéronef (1) comporte un panneau selon la revendication 16.

## Patentansprüche

1. Schallisolierende Verkleidung (10) mit Resonatoren (30),
wobei die Verkleidung (10) ein Gitter (20) umfasst, das mit mindestens zwei Resonatoren (30) und mindestens einem Stift (50) zum Befestigen von mindestens zwei Resonatoren (30) auf einem zu behandelnden Paneel (5) versehen ist, wobei jeder Resonator (30) eine Lamelle (31) umfasst, die sich in Längsrichtung in einer Ebene (P1) von einem an einem Stift (50) befestigten Ende (32) des Resonators (30) zu einem anderen Ende (33) des Resonators (30) erstreckt, wobei die Lamelle (31) mindestens eine Querausbuchtung (35) aufweist,
jeder Stift (50) sich in der Elevation von einer an dem zu behandelnden Paneel (5) zu befestigenden Fläche (55) zu jedem an diesem Stift (50) befestigten Resonator (30) erstreckt,
**dadurch gekennzeichnet, dass**:
mindestens ein Stift (50) ein Dämpfungsmittel (60) umfasst, das zwischen der Fläche (55) und jedem an dem Stift befestigten Resonator (30) angeordnet ist, mindestens ein Stift (50) eine Basis (52) aufweist, die mit einer an einem zu behandelnden Paneel (5) zu befestigenden Fläche (55) und einer durch ein Ende (32, 33) mindestens eines Resonators (30) verlaufenden Stange (53) versehen ist, wobei ein radiales Spiel (56) jede Stange (53) vom Resonator (30) trennt, wobei der Stift (50) Heftmittel (57, 58) umfasst, die ein Ende (32, 33) mindestens eines Resonators (30) an die Basis (52) anklemmen;
und die Querausbuchtung konfiguriert ist, um in einer Elevationsrichtung (D1) senkrecht zu der Ebene (P1) zu schwingen.

2. Verkleidung nach Anspruch 1,
**dadurch gekennzeichnet, dass** ein Resonator (30) zwischen seinen Enden (32) in einer Querrichtung eine konstante erste Breite (L1) aufweist, mit Ausnahme von mindestens einer Zone (31') der Lamelle (31), die eine Ausbuchtung (35) aufweist, so dass sie eine zweite Breite in Querrichtung (L2) aufweist, die größer als die erste Breite (L1) ist.

3. Verkleidung nach einem der Ansprüche 1 bis 2,
**dadurch gekennzeichnet, dass** mindestens zwei Resonatoren (30) Ausbuchtungen (35) mit unterschiedlichen Geometrien aufweisen.

4. Verkleidung nach Anspruch 3,
**dadurch gekennzeichnet, dass** die beiden Resonatoren (30) Lamellen (31) aufweisen, die mit Ausnahme ihrer unterschiedliche Geometrien aufweisenden Ausbuchtungen (35) identisch sind.

5. Verkleidung nach einem der Ansprüche 1 bis 4,
**dadurch gekennzeichnet, dass** mindestens zwei Resonatoren (30), die mit dem gleichen Stift (50) verbunden sind, ein gemeinsames Ende (32, 33) aufweisen.

6. Verkleidung nach einem der Ansprüche 1 bis 5,
**dadurch gekennzeichnet, dass** mindestens ein Resonator (30) mit einem ersten Stift (50) an einem Ende (32) und mit einem zweiten Stift (50) an einem anderen Ende (33) verbunden ist.

7. Verkleidung nach einem der Ansprüche 1 bis 6,
**dadurch gekennzeichnet, dass** das Gitter (20) eine gefräste Platte ist, und dass jeder Resonator (30) mindestens ein mit einem anderen Resonator (30) gemeinsames Ende (32, 33) aufweist.

8. Verkleidung nach einem der Ansprüche 1 bis 7,
**dadurch gekennzeichnet, dass** mindestens eine Lamelle (31) eine Dicke (EP0) in der Elevationsrichtung (D1) von weniger als einem Millimeter aufweist.

9. Verkleidung nach einem der Ansprüche 1 bis 8,
**dadurch gekennzeichnet, dass** mindestens eine Lamelle (31) eine Ausbuchtung (35) in gleichem Abstand vom ersten Ende (32) und dem zweiten Ende (33) dieser Lamelle (31) aufweist.

10. Verkleidung nach einem der Ansprüche 1 bis 9,
**dadurch gekennzeichnet, dass** die Verkleidung (10) eine Abdeckung (100) zum Schutz des Gitters (20) aufweist.

11. Verkleidung nach einem der Ansprüche 1 bis 10,
**dadurch gekennzeichnet, dass** das Dämpfungsmittel (60) eine Dämpfungsscheibe (61) umfasst, die jeden Stift (50) umgibt.

12. Verkleidung nach einem der Ansprüche 1 bis 11,
**dadurch gekennzeichnet, dass** die Beschichtung (10) mindestens ein Gewichtselement (70) umfasst, das mindestens zwei Lamellen (31) von zwei Resonatoren (30) verbindet.

13. Verkleidung nach Anspruch 12,
**dadurch gekennzeichnet, dass** das Gewichtselement (70) mindestens zwei Ausbuchtungen (35) von mindestens zwei Lamellen (31) von zwei Resonatoren (30) verbindet.

14. Verkleidung nach einem der Ansprüche 1 bis 13,
**dadurch gekennzeichnet, dass** das Gitter (20) eine gefräste Platte mit einer Mehrzahl von Resonatoren (30) umfasst, wobei sich jeder Resonator (30) in Längsrichtung zwischen zwei durchbrochenen Enden (32, 33) erstreckt, wobei jedes Ende (32, 33) mehreren Resonatoren (30) gemeinsam ist, wobei jedes Ende (32, 33) auf eine Stange (53) eines Stifts (50) aufgesteckt ist und jeder Stift (50) teilweise von einer Dämpfungsscheibe (61) umgeben ist.

15. Verkleidung nach einem der Ansprüche 1 bis 14,
**dadurch gekennzeichnet, dass** mindestens eine Ausbuchtung (35) mindestens eines Resonators (30) in zwei quer zu beiden Seiten einer Lamelle (31) angeordnete Queraufweitungen (36, 37) unterteilt ist, wobei eine Längssymmetrieachse (80) der Lamelle eine Symmetrieachse der Queraufweitungen (36, 37) darstellt.

16. Paneel (5) mit mindestens einer Wand,
**dadurch gekennzeichnet, dass** das Paneel mindestens eine Verkleidung (10) nach einem der Ansprüche 1 bis 15 aufweist,
und dass jedes Gitter (20) einer Verkleidung (10) nur durch die Stifte (50) dieses Gitters (20) an einer Wand des Paneels (5) befestigt ist.

17. Luftfahrzeug (1), **dadurch gekennzeichnet, dass** dieses Luftfahrzeug (1) ein Paneel nach Anspruch 16 aufweist.

## Claims

1. Sound-insulating covering (10) provided with resonators (30), said covering (10) comprising a lattice (20) provided with at least two resonators (30) and at least one stud (50) for fastening at least two resonators (30) to a panel (5) that is to be treated, each resonator (30) including a blade (31) extending longitudinally in a plane (P1) from one end (32) of the resonator (30) fastened to a stud (50) towards another end (33) of the resonator (30), said blade (31) having at least one transverse protrusion (35), each stud (50) extending in elevation from one face (55) to be secured to the panel (5) that is to be treated towards each resonator (30) fastened to said stud (50), **characterised in that**:
at least one stud (50) includes a damping means (60) arranged between said face (55) and each resonator (30) fastened to said stud, at least one stud (50) comprising a base (52) provided with a face (55) to be secured to a panel (5) that is to be treated and a rod (53) passing through one end (32, 33) of at least one resonator (30), radial clearance (56) separating each rod (53) from the resonator (30), said stud (50) comprising an attachment means (57, 58) that clamps one end (32, 33) of at least one resonator (30) against the base (52);
and said transverse protrusion is designed to oscillate in an elevation direction (D1) perpendicular to said plane (P1).

2. Covering according to claim 1, **characterised in that** a resonator (30) has a first constant width (L1) between the ends (32) thereof in a transverse direction, except for at least one region (31') of the blade (31) which comprises a protrusion (35) such that it has a second transverse width (L2) that is greater than the first width (L1).

3. Covering according to either claim 1 or claim 2, **characterised in that** at least two resonators (30) have protrusions (35) of different geometries.

4. Covering according to claim 3, **characterised in that** said two resonators (30) have identical blades (31), except for the protrusions (35) thereof which have different geometries.

5. Covering according to any of claims 1 to 4, **characterised in that** at least two resonators (30) connected to the same stud (50) have one end (32, 33) in common.

6. Covering according to any of claims 1 to 5, **characterised in that** at least one resonator (30) is connected to a first stud (50) at one end (32) and to a second stud (50) at another end (33).

7. Covering according to any of claims 1 to 6, **characterised in that** said lattice (20) is a machined plate, each resonator (30) having at least one end (32, 33) in common with another resonator (30).

8. Covering according to any of claims 1 to 7, **characterised in that** at least one blade (31) has a thickness (EPO) in said elevation direction (D1) of less than one millimetre.

9. Covering according to any of claims 1 to 8, **characterised in that** at least one blade (31) has a protrusion (35) that is equidistant from the first end (32) and the second end (33) of said blade (31).

10. Covering according to any of claims 1 to 9, **characterised in that** the covering (10) has a cover (100) for protecting said lattice (20).

11. Covering according to any of claims 1 to 10, **characterised in that** said damping means (60) comprises a damping washer (61) surrounding each stud (50).

12. Covering according to any of claims 1 to 11, **characterised in that** said covering (10) comprises at least one weight member (70) which connects at least two blades (31) of two resonators (30).

13. Covering according to claim 12, **characterised in that** said weight member (70) connects at least two protrusions (35) of at least two blades (31) of two resonators (30).

14. Covering according to any of claims 1 to 13, **characterised in that** said lattice (20) comprises a machined plate having a plurality of resonators (30), each resonator (30) extending longitudinally between two perforated ends (32, 33), each end (32, 33) being common to a plurality of resonators (30), each end (32, 33) being fitted onto a rod (53) of a stud (50), each stud (50) being surrounded, in part, by a damping washer (61).

15. Covering according to any of claims 1 to 14, **characterised in that** at least one protrusion (35) of at least one resonator (30) is made up of two transverse extensions (36, 37) arranged transversely on either side of a blade (31), a longitudinal axis (80) of symmetry of the blade representing an axis of symmetry of the transverse extensions (36, 37).

16. Panel (5) provided with at least one wall, **characterised in that** said panel comprises at least one covering (10) according to any of claims 1 to 15, each lattice (20) of a covering (10) being fastened to a wall of the panel (5) by means of the studs (50) of said lattice (20) only.

17. Aircraft (1), **characterised in that** said aircraft (1) comprises a panel according to claim 16.
